# NEW EUROPEAN PATENT SPECIFICATION

(11) **EP 3 592 579 B2**
(45) Date of publication and mention of the opposition decision: **07.05.2025**
(45) Mention of the grant of the patent: 06.07.2022
(21) Application number: 17708798.8
(22) Date of filing: 06.03.2017
(51) Int. Cl.: B60D 1/48

(54) **A TOW BAR ASSEMBLY AND A METHOD FOR MANUFACTURING A TOW BAR ASSEMBLY**
ZUGSTANGENANORDNUNG UND VERFAHREN ZUR HERSTELLUNG EINER ZUGSTANGENANORDNUNG
ENSEMBLE BARRE DE REMORQUAGE ET PROCÉDÉ DE FABRICATION D'UN ENSEMBLE BARRE DE REMORQUAGE

(43) Date of publication of application: 15.01.2020
(73) Proprietor: Brink Towing Systems B.V., 7951 CX Staphorst (NL)
(72) Inventor: KOETSIER, Robert, 8171 KT Vaassen (NL); LESKENS, Harmen, 8024 XM Zwolle (NL)
(74) Representative: Valea AB
(86) International application number: PCT/EP2017/055149
(87) International publication number: WO 2018/162024

(56) References cited:
- EP-A2- 3 115 233
- EP-A2- 3 115 233
- DE-A1- 102008 032 093
- DE-A1- 102015 106 489
- JP-A- 2004 306 776
- JP-B2- 5 768 739
- US-A- 5 094 469
- Montage- und Betriebsanleitung fur die Anhangekupplung 313 192
- Auszug WESTFALIA-KATALOG 2009 mit Detailseite zur Anhangekupplung 313 192
- Lieferschein fur eine Anhangekupplung mit der Bezeichnung 313 192
- Ebay-Angebot einer Anhangekupplung 313 192 600 001
- EG Bauart-Genehmigung fur die Anhangekupplung 327 192
- Montage- und Betriebsanleitung fur die Anhangekupplung313 340
- Auszug aus dem WESTFALIA-KATALOG 2011 mit Detailseite zurAnhangekupplung 313 340
- Lieferschein fur eine Anhangekupplung mit der Bezeichnung 313 340
- Technische Zeichnung zur Anhangekupplung mit der Bezeichnung 327 057
- Lieferschein fur eine Anhangekupplung 327 057
- EG Bauart-Genehmigung fur die Anhangekupplung 327 057
- Ebay-Angebot einer Anhangekupplung 327 057
- Response to the Communication pursuant to R161(1) and R162 EPC
- Response to the First Communication pursuant to Art 94(3) EPC
- Teileliste für die Anhängekupplung 327 057 600 001 mit vier Markierungen aus dem SAP-System der Einsprechenden
- Technische Zeichnung zu den Schweißteilen (Gesamtdarstellung aller Schweißteile) mit der Bezeichnung 327 057 602 001
- Technische Zeichnung eines Winkels 327 057 609 101 und eines Winkels 327 057 609 102 des Schweißteils gemäß Anlage VB36 (D22)
- Knotenblech 327 057 610 101 für das Schweißteil 327 057 602 001 gemäß Anlage VB36

## Description

### TECHNICAL FIELD

Embodiments herein relate to a tow bar for a tow hitch assembly for a vehicle. The tow bar has an improved structure for distributing loads, thereby enabling the tow bar to be stronger or to be manufactured using less material.

### BACKGROUND OF THE INVENTION

Towing hook arrangements for towing e.g. trailers are commonly used today. In most of the cases a tow bar comprising a towing hook is mounted at the rear of a vehicle during the assembly process of the vehicle, although after sales mounting e.g. by an authorized garage is possible. For esthetical and practical reasons it may be desirable to have a towing hook which can be positioned between a towing position and a retracted position. Generally such towing hooks are referred to as retractable towing hooks.

The tow bar of a towing hook arrangement is generally extending in a transverse direction with respect to the vehicle and attached to the vehicle at two vehicle attachment sites on either side of the towing hook. A towing hook is subjected to substantial forces when towing. Just as a matter of example, a towing hook for a regular car may be adapted to a maximum towing weight of 2500 kg and a maximum vertical load of 100 kg. However, larger vehicles, such as e.g. Sport Utility Vehicles (SUVs), may have a maximum towing capacity of up to 3500 kg. The vertical load, sometimes referred to as nose load, is a downwardly directed load due to gravity of the towable object e.g. a trailer, and the load positioned on e.g. the trailer such as rubble or stones. The tow bar is further subjected to dynamic loads, due to e.g. acceleration, braking, curbs, etc.

The vertical load, a horizontal load, and/or the dynamic loads impart the tow bar with torsion. The imparted torsion is dependent on the length of the towing hook which acts as a lever on the tow bar. Tow bars mounted to vehicles with a high towing capacity and a high ride height, such as e.g. SUVs, are particularly exposed to high torsion. The reason for this being that a high weight acts on a towing hook with an increased length in order to compensate for the increased ride height of the vehicle. To compensate for torsion, tow bar manufacturers generally use thicker and stronger material. However, using thicker material generally tends to add weight to the tow bar. Vehicle manufacturers constantly strive towards reducing weight to reduce the fuel consumption of the vehicle. Tow bar manufacturers striving towards reducing the weight of the tow bars are thus constantly struggling with the dilemma of providing a strong and durable tow bar while at the same time providing a low weight tow bar. Heavy tow bars are also cumbersome from a manufacturing point as well as from a logistic point of view. Hence also tow bar manufacturers may benefit from striving towards lighter tow bars.

Document JP 2004 306776 A relates according to its abstract to a trailer hitch device for an automobile. The trailer hitch device is provided with an insert member comprising a pipe material inserted from an opening of a rear floor side member extension member. A reinforcement member provided between the rear floor side member extension member and the insert member is provided with stopper parts abutting on a flange member in the state that it is inserted to a predetermined position of the rear floor side member extension member. The insert member is fixed to the rear floor side member extension member by bolts. A cross member is fixed to a rear end of the insert member and extends in a width direction of the vehicle body. A trailer hitch member is fixed to a midway part in a longitudinal direction of the cross member.

Document US 5 094 469 A relates according to its abstract to a trailer hitch device for a motor vehicle, in which a trailer hitch is mounted on a beam member. The beam member has both its end respectively fixed to right and left rear bumper stays and is covered with a rear bumper face. The trailer hitch is fixed to the beam member and has its coupling ball portion at its distal end protruding rearward of the vehicle body of the vehicle through an opening provided in the bumper face.

Document EP 3 115 233 A2 relates according to its abstract to a trailer coupling for a motor vehicle with a carrier arrangement, which has a cross member intended for arrangement on a rear of a motor vehicle and one on the cross member held holder for holding a coupling arm of the trailer coupling, the coupling arm being provided for fastening a trailer or a load carrier.

### SUMMARY OF THE INVENTION

It is therefore an object of the present disclosure to provide a tow bar which is light while still being able to carry high towing weights. The object is at least partly achieved by an end section for a tow bar assembly for a vehicle according to claim 1 or 2. The end section comprises a vehicle connection portion adapted to be connected to said vehicle and a tow bar connection portion adapted to be connected to said tow bar. The end section further comprises at least a first support element and a second support element being connected to and extending between said vehicle connection portion and said tow bar connection portion. The end section further comprises a third support element being connected to and extending between said first and said second support elements such that a box structure is formed. By providing a box structure, the distance between the connection points which connect the vehicle connection portion to the vehicle and the location where the loads acting on the towing hook are induced in the end section is increased. Thereby the load paths in the end section may be improved such that the loads are directed to areas of the end section where the loads can be transferred to the vehicle. Thereby the risk of damages to the end section may be reduced, since load peaks in areas where no load transfer is possible may be prevented. By improving the load distribution in the end section, the amount of reinforcing material required to compensate for the torsion in the tow bar may be reduced. Thereby the total weight of the towing hook arrangement is also reduced.

The third support element may further be connected to and extend between the vehicle connection portion and the tow bar connection portion. Thereby a substantially confined box structure is formed. By adding an additional support element to the end section an additional load path may be provided for the loads acting on the towing hook, which further improves the load distribution in the tow bar.

The box structure of the end section of claim 1 may also comprise cut outs. The box structure of the end section of claim 2 comprises cut outs. By providing cut outs unnecessary material may be removed from the end section which further increases the weight reduction of the end section.

The cut outs may be positioned in areas less significant for structural integrity. Thereby, a weight reduction may be achieved without reducing the structural integrity of the tow bar.

The cut outs in the end section may also be positioned in the vehicle connection portion to improve a load distribution in that portion. By providing cut outs in specific areas of the end section, a geometry may be provided which directs the forces in the end section to connecting elements for mounting the tow bar to the vehicle. Load paths may be created which improve the load distribution in the end section. Thereby not only the weight of the end section is reduced, the loads are also directed towards areas of the tow bar where the loads can be transferred to the vehicle. In some embodiments providing cut outs in certain areas which improves the load distribution may even increase the integral strength and the stiffness of the end section. The cut outs may however also be positioned to provide flexibility in the vehicle connection portion. By increasing the flexibility in the vehicle connection portion the risk of cracks occurring in the vehicle connection portion due to torsion of the tow bar may be reduced.

At least one cut out may be positioned in the near proximity of a connection point. This increases the flexibility of the vehicle connection portion in the vicinity of the connection point. Thereby, the risk of connection elements for mounting the towing hook arrangement to the vehicle coming loose is reduced, since the connection points can stay parallel to the rear of the vehicle when the tow bar twists.

The vehicle connection portion and the tow bar connection portion may be arranged at an angle to each other. The angle between the vehicle connection portion and the tow bar connection portion may be in the range of 45° to 150°. By arranging the vehicle connection portion and the tow bar connection portion at an angle to each other the load acting on the tow hook may be more efficiently distributed into the end section of the tow bar assembly.

The vehicle connection portion and the tow bar connection portion of the end section of claim 1are formed in a unitary piece of material. The vehicle connection portion and the tow bar connection portion of the end section of claim 2 may be formed in a unitary piece of material. Thereby the manufacturing process is facilitated since the two sections don't have to be joined together upon assembly. Furthermore, the risk of cracks occurring in a joint between the sections, e.g. due to discontinuities in the joint, is reduced.

The vehicle connection portion of the end section of claim 1 may comprise a plurality of connection points at which the vehicle connection portion may be attached to a vehicle. At least some of the vehicle connection points may be arranged inside of said box structure. The vehicle connection portion of the end section of claim 2 comprises a plurality of connection points at which the vehicle connection portion may be attached to a vehicle. At least some of the vehicle connection points are arranged inside of said box structure. By determining specific connection points the structure of the end section, and thereby the load distribution in the end section, may be optimized, in order to transfer the loads to the vehicle.

The vehicle connection portion, the tow bar connection portion and the support elements may be joined together by welding, adhesive, screw(s), bolt(s), or combinations thereof.

The support elements may have a different thickness than the vehicle connection portion and the tow bar connection portion. The thickness of the portions may herein also be referred to as the gauge size of the portions. The thickness of the support elements may e.g. be smaller than the thickness of the vehicle connection portion and the tow bar connection portion in order to further reduce the weight of the tow bar assembly.

The object is further achieved by a tow bar assembly for a vehicle. The tow bar assembly comprises at least one end section according to any one of claims 1-13, preferably two end sections according to the embodiments disclosed herein.

The object is further achieved by a method for manufacturing an end section for a tow bar assembly according to claim 15 or 16. The method comprises providing a vehicle connection portion, a tow bar connection portion, and a first, a second and a third support element. The method further comprises fixedly arranging the vehicle connection portion, the tow bar connection portion and the first, the second and the third support elements to each other, such that a box structure is formed.

The box construction improves the load distribution in the end section which allows the amount of material used in the end section to be reduced, thereby reducing the weight of the end section.

The method may further comprise the step of providing said third support element, such that the third support element may be fixedly arranged to the vehicle connection portion, the tow bar connection portion and the first and the second support elements. Thereby, an enclosed box structure is formed. Thereby an additional load path may be provided for the loads acting on the towing hook, which further improves the load distribution in the tow bar.

The fixedly arranging of the support elements and the connection portions may comprise joining the vehicle connection portion, the tow bar connection portion and the plurality of support elements to each other by welding, adhesive, screw(s), bolt(s), or combinations thereof.

The method of claim 15 for manufacturing an end section for a tow bar assembly may further comprise providing cut outs in the box structure. The method of claim 16 for manufacturing an end section for a tow bar assembly further comprises providing cut outs in the box structure. Thereby the structure of the end section may further be improved such that loads in the end section may be directed towards a vehicle connection point rather than creating load peaks in the tow bar assembly which may lead to failure of the tow bar.

In the method of claim 15, the cut outs may be provided in the vehicle connection portion, the tow bar connection portion and/or in the plurality of support elements prior to fixedly arranging them to each other. In the method of claim 16, the cut outs are provided in the vehicle connection portion, the tow bar connection portion and/or in the plurality of support elements prior to fixedly arranging them to each other. Providing the cut outs in the elements prior to assembly may be easier than to provide the cut outs in the box structure after assembly of the elements. Thereby the manufacturing process is facilitated

By the term "box structure" as used herein is meant any structure from which when starting at a reference point at the centre of the structure will pass the perimeter of a wall, through the wall or through an opening in a wall. The box structure may have at least six distinct surfaces arranged at an angle to each other. An open box structure may be provided with one of the surfaces not having a wall, while a confined box structure comprises a void confined by walls on each surface around the centre reference point.

### BRIEF DESCRIPTION OF THE DRAWINGS

### DETAILED DESCRIPTION OF PREFERRED EMBODIMENTS

Non-limiting embodiments of the present inventions will be described in greater detail with reference to the accompanying figures.
Figure 1 shows a tow bar assembly comprising two end sections for improving the load distribution of the tow bar assembly;
figure 2 shows an embodiment of a main bracket of the improved end section;
figure 3 shows the improved end section according to a first embodiment viewed from above;
figure 4 shows an exploded view of the improved end section according to a first embodiment;
figure 5 shows the improved end section in an assembled state according to a first embodiment;
figure 6 shows the improved end section in an assembled state according to a second embodiment;
figure 7 shows a schematic process diagram of a method for manufacturing a tow bar.

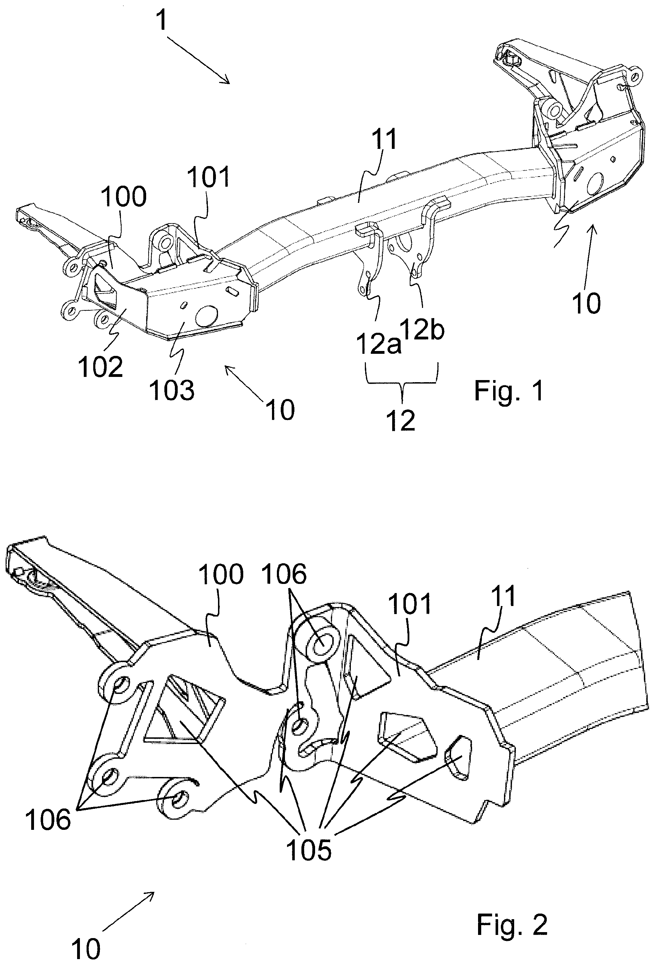

**Figure 1** discloses a tow bar assembly 1 according to embodiments disclosed herein. The tow bar assembly 1 comprises a tow bar 11, a first and a second end section 10 and a towing hook receiving portion 12 for receiving a towing hook (not shown). The towing hook may be a retractable towing hook, a removable towing hook, a fixed towing hook, an accessory coupling or a combination thereof. The tow bar 11 may be formed by a tube like section having a circular, elliptical, rectangular or polygonal cross-section. In some embodiments the tow bar 11 may be extruded. The tube like section of the tow bar 11 may be straight or may comprise one or more bends in order to adjust the location of the towing hook connection portion in relation to the end section 10. The tube like section may e.g. be bent in order to provide additional space for mounting and housing the towing hook in a vertical direction. The towing hook receiving portion 12 in the embodiment disclosed in figure 1 is formed by two opposing steel brackets 12a, 12b but may also be formed in any other suitable way for receiving a towing hook, such as e.g. a single bracket. The brackets 12a, 12b of the towing hook receiving portion may be connected to the tow bar 11 by welding, adhesive or by means of connection elements, such as e.g. screw(s), bolt(s), rivets or the like.

The end sections 10 comprise a vehicle connection portion 100 for mounting the end section 10 to a rear wall of a vehicle (not shown) and a tow bar connection portion 101 for connecting the tow bar 11 to the end section 10 and a plurality of support elements 102, 103, 104 for reinforcing the end section. The vehicle connection portion 100 is arranged substantially parallel to a rear wall of a vehicle and is adapted to be mounted to the rear wall of the vehicle, or more specifically to a rear portion of the vehicle chassis. The tow bar connection portion 101 is arranged adjacent and substantially parallel to the end of the tow bar 11 and may be joined to the tow bar 11 by welding, adhesive or by means of connection elements, such as e.g. screw(s), bolt(s), rivets or the like. The end section 10 is arranged for transferring loads acting on the towing hook to the rear wall of the vehicle. The support elements 102, 103, 104 are connected to and extend between the vehicle connection portion 100 and the tow bar connection portion 101, such that the end section 10 forms a box structure. The shape of the box structure is adapted to improve the distribution of loads originating from e.g. a trailer attached to a towing hook of the tow bar assembly, through the end section 10 towards the vehicle connected to the vehicle connection portion. The shape of the box structure is further adapted to fit underneath a cover, such as a rear bumper of the vehicle. The shape of the box structure may be adapted to maximise the usage of the available space provided between the rear wall of the vehicle and the bumper in order to provide a structure with improved load distribution capabilities. As a result of the improved load distribution the gauge size of the end section, which is the thickness of the individual elements of the end section 10 may be reduced.

**Figure 2** discloses a close up of the vehicle connection portion 100 and the tow bar connection portion 101. The vehicle connection portion 100 is arranged to be attached substantially parallel to a rear wall of the vehicle and comprises at least one connection point 106 for securing the vehicle connection portion 100 to the rear wall of the vehicle. The tow bar connection portion 101 is arranged at an angle to the rear wall of the vehicle parallel to a cross-section of the tow bar 11 and is attached to the tow bar 11.

The vehicle connection portion 100 and the tow bar connection portion 101 may further comprise cut outs 105, which may be arranged in the periphery of the portions 100, 101 or as through holes in the surface of the portions 100, 101. A cut out 105 may also extend over both the vehicle portion 101 and the tow bar connection portion 101. The cut outs 105 reduce the weight of the portions they are arranged on.

In some embodiments the cut outs 105 may be positioned to provide flexibility of the vehicle connection portion 100. By positioning cut outs 105 in the near vicinity of a connection point 106, the vehicle connection portion 100 may be provided with flexibility for torsion due to loads acting on the towing hook. Due to the added flexibility of the vehicle connection portion 100 the connection point 106 will remain parallel to the rear wall of the vehicle when the vehicle connection portion 100 twists, which will reduce the risk of the connection elements, such as e.g. screws, bolts or rivets, coming lose.

Cut outs 105 may also be arranged in the vehicle portion 100, the tow bar connection portion and/or the support elements 102, 103, 104 as a steering feature for load paths. By providing cut outs 105 in certain areas of the vehicle connection portion, load paths may be provided which improve the load distribution in the vehicle connection portion. The load distribution may e.g. be directed towards the connection points 106 where the loads can be successfully transferred to the vehicle.

The position of the cut outs 105 may be selected by performing a finite model analysis applying finite model theory. Firstly, a finite element (FE) model is generated for the box structure. The FE model should be generated so as to model the shape and material of the parts constituting the box structure. The box structure is thereafter subjected to a simulated applied load via the connection points 106 on the vehicle portion 100 and the tow bar connection portion 101. The load path through the box structure may be identified. Cut outs 105 may be arranged on those regions of the box structure which are subjected to no load, or a relatively low load. The cut outs 105 may also be arranged on regions which are subjected to a relatively high load in order to optimize the load path in the box structure and distribute the loads away from the high load region towards the connection points 106. A new finite model may be formed on the new box structure with the cut outs 105 to secure that the new box structure comprising the cut outs can withstand the required load.

The vehicle connection portion 100 and the tow bar connection portion 101 may be manufactured from a single sheet of material. The material may be a metal, such as for example steel. The vehicle connection portion 100 and the tow bar connection portion 101 may be fixed to each other, such that they form a main bracket for mounting the tow bar 11 to the vehicle. In some embodiments the vehicle connection portion 100 and the tow bar connection portion 101 may be formed from a single sheet of material which may be bent into the shape of the main bracket.

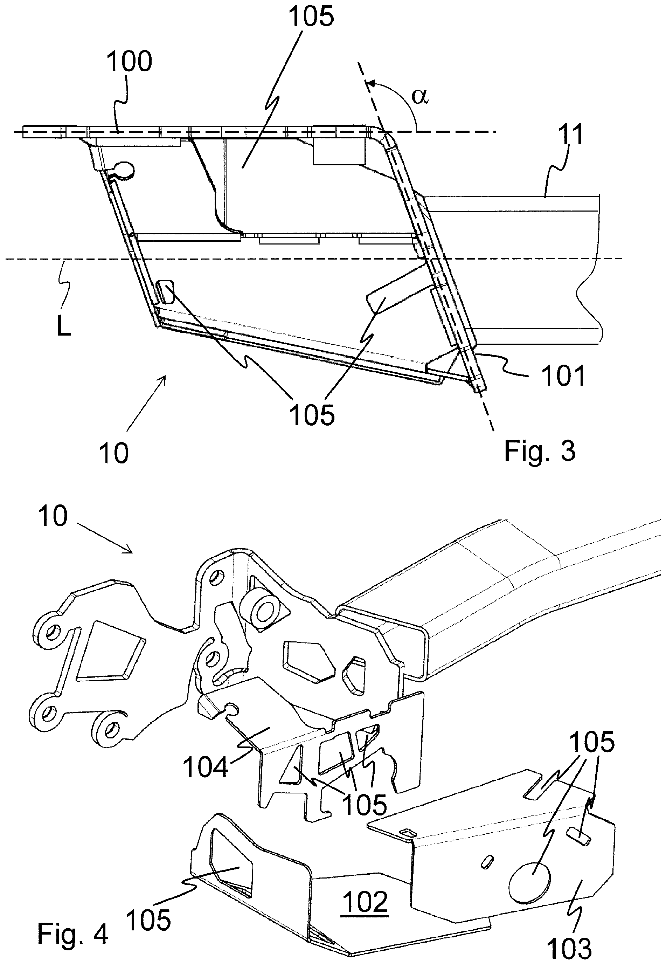

**Figure 3** discloses the end section 10 seen from above. As can be seen in the figure, the vehicle connection portion 100 is substantially parallel to a longitudinal axis L of the tow bar 11. The tow bar connection portion 101 is arranged in parallel to an end surface of the tow bar 11, such that the complete periphery of the end surface of the tow bar 11 abuts the tow bar connection surface. The vehicle connection portion 100 and the tow bar connection portion 101 are therefore arranged at an angle α to each other. The angle α may be in the range of 45 to 150°, preferably in the range of 45 to 135°. In some embodiments the tow bar connection portion 101 may be arranged perpendicular to the vehicle connection portion 100. By arranging the vehicle connection portion 100 and the tow bar connection portion 101 at an angle α to each other a better load transfer from the tow bar 11 into the vehicle connection portions 106, and thereby to the vehicle towing the trailer can be achieved. Furthermore, by arranging the tow bar connection portion 101 at an angle to the vehicle connection portion100, the length of the tow bar 11 can be reduced, which further reduces the weight of the tow bar assembly 1. In some embodiments the vehicle connection portion 100 and the tow bar connection portion 101 are made out of a single sheet of material that is bent in shape to form the vehicle connection portion 100 and the tow bar connection portion 101 at the angle α to each other.

**Figure 4** shows an exploded view of the end section 10 according to embodiments herein. The end section 10 comprises the vehicle connection portion 100, which has a main extension substantially in parallel to a rear wall of the vehicle when assembled thereto, and the tow bar connection portion 101, which has a main extension at an angle to the vehicle connection portion in parallel to a vertical longitudinal plane. A plurality of support elements 102, 103, 104, which are shaped as sheets or plates, are arranged between and are connected to the vehicle connection portion 100 and the tow bar connection portion 101. The support elements 102, 103, 104 are arranged such that the support elements 102, 103, 104, the vehicle connection portion 100 and the tow bar connection portion 101 each forms at least one surface of a box structure. The support elements 102, 103, 104 provide an additional load distribution path for distributing loads imparted from the tow bar connection portion 101 to the vehicle connection portion 100.

The first support element 102 is connected to and extends between the vehicle connection portion 100 and the tow bar connection portion 101 in at least a different plane than the main extension planes of the vehicle connection portion 100 and the tow bar connection portion 101, such as e.g. in a horizontal plane. The first support element 102 may further comprise a section which has a main extension in one or more additional planes, such as e.g. in the main extension planes of the vehicle connection portion 100 and the tow bar connection portion 101, such that the first support element provides two different surfaces of the box structure.

The second support element 104 is also connected to and extends between the vehicle connection portion 100 and the tow bar connection portion 101 in at least a different plane than the main extension planes of the vehicle connection portion 100 and the tow bar connection portion 101, such as e.g. in a horizontal plane. The second support element may also have an extension substantially in parallel with the vehicle connection portion 100 between the vehicle connection portion 100 and the third support element 103. The second support element 104 may also comprise one or more additional sections having a main extension in one or more further planes and may correspondingly also provide a plurality of surfaces.

The third support element 103 is arranged such that it is connected to and extends between the first and the second support elements 102, 104. The third support element 103 may have a main extension in a different plane than the first support element 102 and the second support element 104, such that the first support element 102, the second support element 104 and the third support element 103 provide different surfaces of the box structure. In some embodiments the second support element 103 may have a main extension substantially in parallel to the vehicle connection portion 100. The main extension plane of the second support element 103 may be substantially perpendicular to a main extension plane of the first support element 102 and/or the second support element 104. The third support element 103 may be connected to and extend between two or more of the vehicle connection portion 100, the tow bar connection portion 101, the first support element 102 and the second support element 104. The third support element 103 may have a main extension in the plane different than the main extension planes of the vehicle connection portion 100 and the tow bar connection portion 101. The third support element 103 may further have an extension in an additional plane, such as e.g. in the main extension plane of the tow bar connection portion 101. Thereby, also the third support element 103 may provide a plurality of surfaces of the box structure.

The different surfaces may each be adapted to improve the load distribution in the end section 10.

The support elements 102, 103, 104 may be formed by different materials. The material may be fibre reinforced plastics, carbon or a metal, such as e.g. steel, high class steel or aluminium. The support elements 102, 103, 104 may be formed by one or more sheet material, preferably metal sheet, such as e.g. steel plates. The sheet material may be bent in order to provide two or more surfaces on the support elements 102, 103, 104, each surface having a main extension in a different plane. The support elements may be made of the same material as the vehicle connection portion 100.

Due to the improved load distribution in the box structure the amount of material used in the end section can be reduced without reducing the strength of the tow bar assembly 1. Hence, also the thickness of the material, which may also be referred to as the gauge size, may be reduced. The thickness of the support elements 102, 103, 104, may e.g. be smaller than the thickness of the vehicle connection portion 100 and/or the tow bar connection portion 101. By reducing the thickness, the weight of the support elements may be reduced, which further reduces the weight of the tow bar assembly 1. The thickness of the material used for the connection portions 100, 101 and the support elements 102, 103, 104 is depending on the application, such as the maximum allowed tow capacity and load on the towing hook as well as the geometry of the towing hook, and may be in the range of 2-8 mm. In some embodiments, the thickness off the connection portions 100, 101 may be 8 mm and the thickness of the support elements 102, 103, 104 may be 3 mm.

The support elements 102, 103, 104 may also comprise cut outs 105 for further reducing the weight. In some embodiments, one or more of the connection points 106 may be located within the box structure created by the of the end section 10. The cut outs 105 may be arranged such that connection means, such as e.g. screws, bolts or rivets, can be inserted into the box structure and arranged at the connection points 106, in order to allow the tow bar assembly 1 to be mounted to the rear wall of the vehicle.

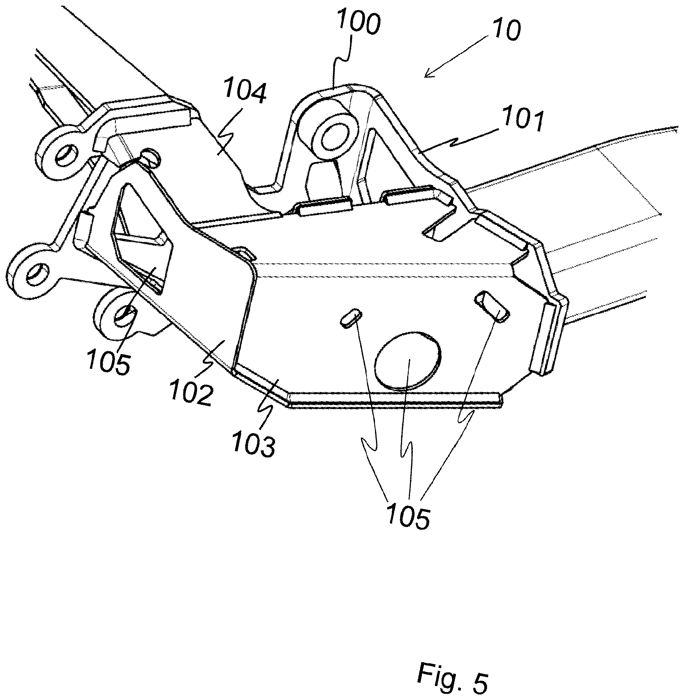

**Figure 5** discloses the end section 10 in an assembled state. The vehicle connection portion 100, the tow bar connection portion 101 and one or more support elements 102, 103, 104 may be connected in a suitable manner such as e.g. by means of welding, adhesive, screw(s), bolt(s), or combinations thereof, to form the box structure. The box structure further comprises cut outs 105 for reducing the weight of the end section. The cut outs 105 in the end section may be positioned in areas less significant for structural integrity, or may be positioned in order to improve flexibility and/or load paths in the end section 10. The position of the cut outs may e.g. be determined via a computerized model, such as e.g. by means of FEM analysis, of the end section and/or the tow bar assembly 1.

Although the support elements 102, 103, 104 according to the embodiment disclosed in figure 4 and 5 are provided as separate pieces of material, an equivalent shape and load distribution may also be achieved by a single piece of material formed into a corresponding shape, such as e.g. by means of casting or bending of a single sheet of material, or by an increased number of pieces of material. Hence, the structure of the end section and the load paths generated by the structure may be provided by one single piece of material being formed, e.g. by cutting and/or bending the piece of material, to provide the functionality of the one or more support elements 102, 103, 104 disclosed herein.

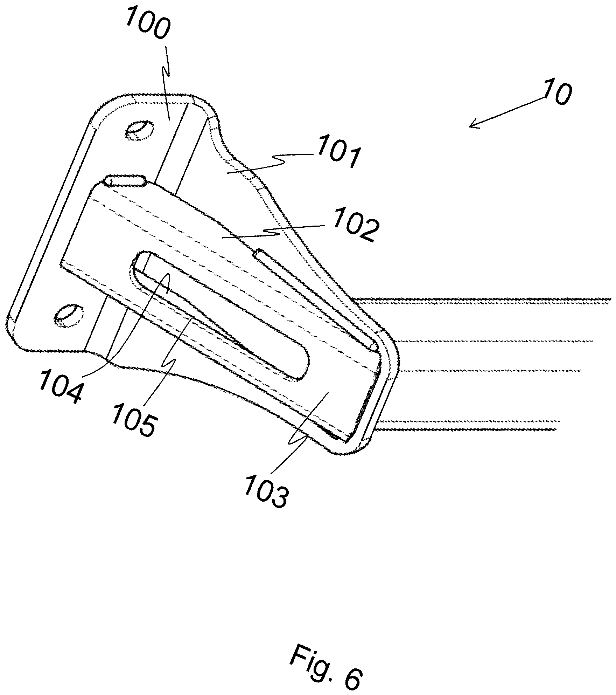

**Figure 6** discloses the end section 10 in an assembled state according to a second embodiment herein. The end section 10 comprises the first support element 102, which is connected to and extends between the vehicle connection portion 100 and the tow bar connection portion 101 in at least a different plane than the main extension planes of the vehicle connection portion 100 and the tow bar connection portion 101, such as e.g. in a substantially horizontal plane. The end section 10 further comprises the second support element 104, which is connected to and extends between the vehicle connection portion 100 and the tow bar connection portion 101 in at least a different plane than the main extension planes of the vehicle connection portion 100 and the tow bar connection portion 101, such as e.g. in a substantially horizontal plane. The end section 10 further comprises the third support element 103 being connected to and extending between said first and said second support elements 102, 104. The third support element 103 is arranged such that it has a main extension in a different plane than the first support element 102 and the second support element 104. Thereby, the first support element 102, the second support element 104 and the third support element 103 provide different surfaces of the box structure. The third support element 103 may extend between one or more of the vehicle connection portion 100, the tow bar connection portion 101, the first support element 102 and the second support element 104. The main extension plane of the second support element 103 may be substantially perpendicular to a main extension plane of the first support element 102 and/or the second support element 104. The third support element 103 may further extend substantially in parallel with at least one of the other surfaces of the box structure, provided by any one of the vehicle connection portion 100, the tow bar connection portion 101, the first support element 102 or the second support element 104, such that a substantially closed box surface is provided.

The vehicle connection portion 100, the tow bar connection portion 101 and one or more support elements 102, 103, 104 may be connected in a suitable manner such as e.g. by means of welding, adhesive, screw(s), bolt(s), or combinations thereof, to form the box structure. The box structure may further comprise cut outs 105 for reducing the weight of the end section. The cut outs 105 in the end section may be positioned in areas less significant for structural integrity, or may be positioned in order to improve flexibility and/or load paths in the end section 10. The position of the cut outs may e.g. be determined via a computerized model, such as e.g. by means of FEM analysis, of the end section and/or the tow bar assembly 1.

The support elements 102, 103, 104 are provided as separate pieces of material, the support elements may also be formed by a single piece of material into a corresponding shape having an equivalent load distribution, such as e.g. by means of casting or bending of the single sheet of material. Each support element 102, 103, 104 may also be formed out of an increased number of pieces of material. Hence, the structure of the end section and the load paths generated by the structure may be provided by one single piece of material being formed, e.g. by cutting and/or bending the piece of material, to provide the functionality of the one or more support elements 102, 103, 104 such as disclosed in figure 6.

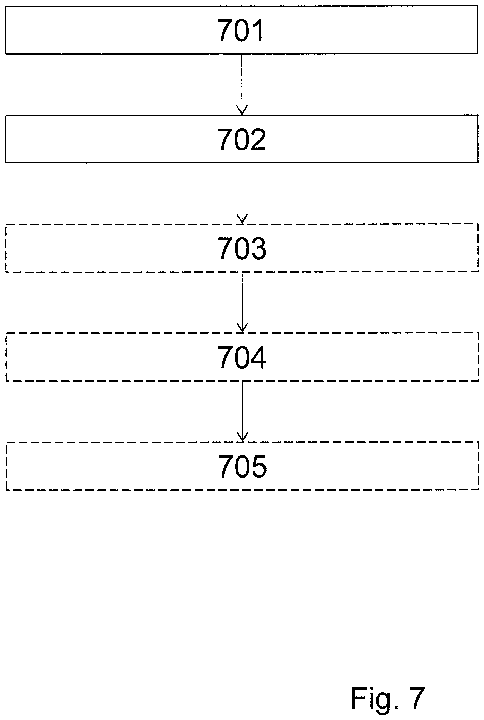

It is further an object of the present disclosure to provide a method for manufacturing an improved end section for a tow bar assembly. An embodiment of the method for manufacturing an end section for a tow bar assembly will in the following be disclosed with reference to **figure 7****.**

In step 701, a vehicle connection portion 100, a tow bar connection portion 101, a first support element 102, a second support element 104 and a third support element 103 are provided. The connection portions 100, 101 and the support elements 102, 103, 104 may be provided as preformed elements having a predetermined shape which, when the elements are assembled, provide an improved load distribution in the end section 10. The shape of the preformed elements may be determined by analysing a model of an assembled end section 10 and/or the tow bar assembly 1. The model may be analysed while taking constraints of a specific vehicle type, such as e.g. dimensions, shapes, maximum towing capacity etc., under consideration. Thereby a specific shape of the end section 10 may be determined for each individual vehicle model which will optimize the load distribution in the end section 10 for the specific vehicle model. The determined shape may then be provided by cutting, milling and/or bending sheets of material, such as e.g. metal sheets, into the determined shape.

In step 702, the vehicle connection portion 100, the tow bar connection portion 101 and the first, the second and the third support elements 102, 104, 103 are fixedly arranged to each other, such that a box structure is formed. The connection portions 100, 101 and the support elements 102, 103, 104 may be fixedly arranged to each other by joining them together by welding, adhering, bolting or screwing them to each other.

In step 703, the third support element 103 may be provided as a preformed element, having a shape such that the third support element 103 may be connected to and extend between each of the vehicle connection portion 100, the tow bar connection portion 101, the first support element 102 and the second support element 104 such that an enclosed box structure is formed. The shape of the preformed element may be determined in the same manner as described in step 701.

In step 704, the third support element 103 may be fixedly arranged to the vehicle connection portion 100, the tow bar connection portion 101 and the first and the second support elements 102, 104 such that the enclosed box structure is formed. Thereby an additional load path may also be provided which further improves the load distribution in the end section 10. The third support element 103 may be fixedly arranged in the same manner as described in step 702.

In step 705, cut outs 105 may be provided in the box structure. The cut outs 105 may be provided in areas of the box structure to improve the load paths and thereby the load distribution in the end section 10 and/or to remove material in areas subjected to low loads. Due to the improved load distribution the material of the end section 10 may further be reduced, such as e.g. by reducing the thickness of the sheet material used for the connection portions 100, 101 and the support elements 102, 103, 104. The cut outs 105 may be provided after assembly of the box construction by cutting or milling the cut outs 105 from the assembled box structure. The location and the shape of the cut outs 105 may be determined by analysing the model of the end section 10 and/or the tow bar assembly 1 as disclosed in step 701. It should however be noted that this step may be optional, since the cut outs 105 may be provided in the vehicle connection portion 100, the tow bar connection portion 101 and/or in the plurality of support elements 102, 103, 104 prior to fixedly arranging them to each other. The cut outs 105 may e.g. be provided upon shaping the connection portions 100, 101 and the support elements 102, 103, 104 in step 701 and/or 703.

## Claims

1. An end section (10) for a tow bar assembly (1) for a vehicle, said end section (10) comprising a vehicle connection portion (100) adapted to be connected to said vehicle and a tow bar connection portion (101) adapted to be connected to a tow bar (11), and at least a first support element (102) and a second support element (104) being connected to and extending between said vehicle connection portion (100) and said tow bar connection portion (101),
**characterized in that**
said end section (10) comprises a third support element (103) being connected to and extending between said first and said second support elements (102, 104) such that a box structure is formed,
said vehicle connection portion (100) is arranged substantially parallel to a rear wall of said vehicle, and
said tow bar connection portion (101) is arranged adjacent and substantially parallel to the end of said tow bar (11),
wherein said first, second and third support elements (102, 104, 103) are provided as separate pieces of material,
said vehicle connection portion (100) and said tow bar connection portion (101) being formed in one unitary piece of material.

2. An end section (10) for a tow bar assembly (1) for a vehicle, said end section (10) comprising a vehicle connection portion (100) adapted to be connected to said vehicle and a tow bar connection portion (101) adapted to be connected to a tow bar (11), and at least a first support element (102) and a second support element (104) being connected to and extending between said vehicle connection portion (100) and said tow bar connection portion (101),
**characterized in that**
said end section (10) comprises a third support element (103) being connected to and extending between said first and said second support elements (102, 104) such that a box structure is formed,
said vehicle connection portion (100) is arranged substantially parallel to a rear wall of said vehicle, and
said tow bar connection portion (101) is arranged adjacent and substantially parallel to the end of said tow bar (11),
wherein said box structure comprises cut outs (105),
wherein said vehicle connection portion (100) comprises a plurality of connection points (106) at which said vehicle connection portion may be attached to a vehicle, at least some of said vehicle connection points (106) being arranged inside of said box structure.

3. The end section (10) according to claim 1, wherein said vehicle connection portion (100) comprises a plurality of connection points (106) at which said vehicle connection portion may be attached to a vehicle, at least some of said vehicle connection points (106) being arranged inside of said box structure.

4. The end section (10) according to claim 1 or 3, wherein said box structure comprises cut outs (105).

5. The end section (10) according to claim 2 or 4, wherein said cut outs (105) are positioned in areas less significant for structural integrity.

6. The end section (10) according to claim 2, 4 or 5, wherein said cut outs (105) are positioned in the vehicle connection portion (100) to improve a load distribution in that portion.

7. The end section (10) according to any of the claims 2, 4, 5, or 6, and wherein at least one cut out (105) is positioned in the near proximity of a connection point (106) at which the vehicle connection portion (100) may be attached to a vehicle.

8. The end section (10) according to any one of the preceding claims, wherein said third support element (103) is connected to and extending between said vehicle connection portion (100) and said tow bar connection portion (101) such that a substantially confined box structure is formed.

9. The end section (10) according to any one of the preceding claims, wherein said vehicle connection portion (100) and said tow bar connection portion (101) are arranged at an angle (α) to each other.

10. The end section (10) according to claim 9, wherein the angle (α) between the vehicle connection portion (100) and the tow bar connection portion (101) is in the range of 45° to 150°.

11. The end section (10) according to claim 2 or any one of claims 5-10 when dependent on claim 2, wherein said vehicle connection portion (100) and said tow bar connection portion (101) are formed in one unitary piece of material.

12. The end section (10) according to any of the preceding claims, wherein the vehicle connection portion (100), the tow bar connection portion (101) and the support elements (102, 104, 103) are joined together by welding, adhesive, screw(s), bolt(s), or combinations thereof.

13. The end section (10) according to any of the preceding claims, wherein the support elements (102, 104, 103) have a different thickness than the vehicle connection portion (100) and the tow bar connection portion (101).

14. A tow bar assembly (1) for a vehicle, said tow bar assembly (1) comprising at least one end section (10) according to any one of the preceding claims, preferably two end sections (10) according to any one of the preceding claims.

15. A method for manufacturing an end section (10) for a tow bar assembly (1), said method comprising the steps of:
- providing a vehicle connection portion (100), a tow bar connection portion (101), a first, a second and a third support element (102, 104, 103), said first, second and third support elements (102, 104, 103) being provided as separate pieces of material, said vehicle connection portion (100) and said tow bar connection portion (101) being formed in one unitary piece of material,
- fixedly arranging the vehicle connection portion (100), the tow bar connection portion (101) and the first, the second and the third support elements (102, 104, 103) to each other, such that said first support element (102) and said second support element (104) are connected to and extend between said vehicle connection portion (100) and said tow bar connection portion (101), and such that a box structure is formed,
said vehicle connection portion (100) being arranged substantially parallel to a rear wall of said vehicle, and
said tow bar connection portion (101) being arranged adjacent and substantially parallel to the end of said tow bar (11).

16. A method for manufacturing an end section (10) for a tow bar assembly (1), said method comprising the steps of:
- providing a vehicle connection portion (100), a tow bar connection portion (101), a first, a second and a third support element (102, 104, 103),
- fixedly arranging the vehicle connection portion (100), the tow bar connection portion (101) and the first, the second and the third support elements (102, 104, 103) to each other, such that said first support element (102) and said second support element (104) are connected to and extend between said vehicle connection portion (100) and said tow bar connection portion (101), and such that a box structure is formed,
- providing cut outs (105) in the box structure,
- providing said vehicle connection portion (100) with a plurality of connection points (106) at which said vehicle connection portion may be attached to a vehicle, at least some of said vehicle connection points (106) being arranged inside of said box structure,
said vehicle connection portion (100) being arranged substantially parallel to a rear wall of said vehicle, and
said tow bar connection portion (101) being arranged adjacent and substantially parallel to the end of said tow bar (11).

17. The method according to claim 15, said method further comprising the step of:
- providing cut outs (105) in the box structure.

18. The method according to any one of claims 16-17, wherein the cut outs (105) are provided in the vehicle connection portion (100), the tow bar connection portion (101) and/or in the plurality of support elements (102, 103, 104) prior to fixedly arranging them to each other.

19. The method according to any one of claims 15-18, wherein the third support element (103) is arranged such that it is connected to and extends between said first and said second support elements (102, 104), such that the box structure is formed,
preferably such that the third support element (103) is fixedly arranged to the vehicle connection portion (100), the tow bar connection portion (101) and the first and the second support elements (102, 104).

20. The method according to any one of claims 15-19, wherein the fixedly arranging comprises joining the vehicle connection portion (100), the tow bar connection portion (101) and the plurality of support elements (102, 103, 104) to each other by welding, adhesive, screw(s), bolt(s), or combinations thereof.

## Patentansprüche

1. Endabschnitt (10) für eine Zugstangenbaugruppe (1) für ein Fahrzeug, wobei der Endabschnitt (10) ein Fahrzeugverbindungsstück (100), das angepasst ist, um mit dem Fahrzeug verbunden zu werden, und ein Zugstangenverbindungsstück (101), das angepasst ist, um mit einer Zugstange (11) verbunden zu werden, und wenigstens ein erstes Tragelement (102) und ein zweites Tragelement (104), die mit dem Fahrzeugverbindungsstück (100) und dem Zugstangenverbindungsstück (101) verbunden sind und sich zwischen ihnen erstrecken, umfasst,
**dadurch gekennzeichnet, dass**
der Endabschnitt (10) ein drittes Tragelement (103) umfasst, das mit dem ersten und dem zweiten Tragelement (102, 104) verbunden ist und sich zwischen ihnen derart erstreckt, dass eine Kastenstruktur ausgebildet wird,
das Fahrzeugverbindungsstück (100) im Wesentlichen parallel zu einer Rückwand des Fahrzeugs angeordnet ist, und
das Zugstangenverbindungsstück (101) neben und im Wesentlichen parallel zu dem Ende der Zugstange (11) angeordnet ist,
wobei das erste, das zweite und das dritte Tragelement (102, 104, 103) als separate Materialteile bereitgestellt werden,
wobei das Fahrzeugverbindungsstück (100) und das Zugstangenverbindungsstück (101) aus einem einheitlichen Materialteil ausgebildet sind.

2. Endabschnitt (10) für eine Zugstangenbaugruppe (1) für ein Fahrzeug, wobei der Endabschnitt (10) ein Fahrzeugverbindungsstück (100), das angepasst ist, um mit dem Fahrzeug verbunden zu werden, und ein Zugstangenverbindungsstück (101), das angepasst ist, um mit einer Zugstange (11) verbunden zu werden, und wenigstens ein erstes Tragelement (102) und ein zweites Tragelement (104), die mit dem Fahrzeugverbindungsstück (100) und dem Zugstangenverbindungsstück (101) verbunden sind und sich zwischen ihnen erstrecken, umfasst,
**dadurch gekennzeichnet, dass**
der Endabschnitt (10) ein drittes Tragelement (103) umfasst, das mit dem ersten und dem zweiten Tragelement (102, 104) verbunden ist und sich zwischen ihnen derart erstreckt, dass eine Kastenstruktur ausgebildet wird,
das Fahrzeugverbindungsstück (100) im Wesentlichen parallel zu einer Rückwand des Fahrzeugs angeordnet ist, und
das Zugstangenverbindungsstück (101) neben und im Wesentlichen parallel zu dem Ende der Zugstange (11) angeordnet ist,
wobei die Kastenstruktur Ausschnitte (105) umfasst,
wobei das Fahrzeugverbindungsstück (100) mehrere Verbindungspunkte (106) umfasst, an denen das Fahrzeugverbindungsstück an einem Fahrzeug befestigt werden kann, wobei wenigstens einige der Fahrzeugverbindungspunkte (106) innerhalb der Kastenstruktur angeordnet sind.

3. Endabschnitt (10) nach Anspruch 1, wobei das Fahrzeugverbindungsstück (100) mehrere Verbindungspunkte (106) umfasst, an denen das Fahrzeugverbindungsstück an einem Fahrzeug befestigt werden kann, wobei wenigstens einige der Fahrzeugverbindungspunkte (106) innerhalb der Kastenstruktur angeordnet sind.

4. Endabschnitt (10) nach Anspruch 1 oder 3, wobei die Kastenstruktur Ausschnitte (105) umfasst.

5. Endabschnitt (10) nach Anspruch 2 oder 4, wobei die Ausschnitte (105) in Bereichen positioniert sind, die für eine strukturelle Integrität weniger wichtig sind.

6. Endabschnitt (10) nach Anspruch 2, 4 oder 5, wobei die Ausschnitte (105) in dem Fahrzeugverbindungsstück (100) positioniert sind, um eine Lastverteilung in diesem Stück zu verbessern.

7. Endabschnitt (10) nach einem der Ansprüche 2, 4, 5 oder 6, und wobei wenigstens ein Ausschnitt (105) in der unmittelbaren Nähe eines Verbindungspunkts (106) positioniert ist, an dem das Fahrzeugverbindungsstück (100) an einem Fahrzeug befestigt werden kann.

8. Endabschnitt (10) nach einem der vorhergehenden Ansprüche, wobei das dritte Tragelement (103) mit dem Fahrzeugverbindungsstück (100) und dem Zugstangenverbindungsstück (101) verbunden ist und sich zwischen ihnen derart erstreckt, dass eine im Wesentlichen begrenzte Kastenstruktur ausgebildet wird.

9. Endabschnitt (10) nach einem der vorhergehenden Ansprüche, wobei das Fahrzeugverbindungsstück (100) und das Zugstangenverbindungsstück (101) in einem Winkel (α) zueinander angeordnet sind.

10. Endabschnitt (10) nach Anspruch 9, wobei der Winkel (α) zwischen dem Fahrzeugverbindungsstück (100) und dem Zugstangenverbindungsstück (101) in dem Bereich von 45° bis 150° liegt.

11. Endabschnitt (10) nach Anspruch 2 oder einem der Ansprüche 5 bis 10, wenn abhängig von Anspruch 2, wobei das Fahrzeugverbindungsstück (100) und das Zugstangenverbindungsstück (101) in einem einheitlichen Materialteil ausgebildet sind.

12. Endabschnitt (10) nach einem der vorhergehenden Ansprüche, wobei das Fahrzeugverbindungsstück (100), das Zugstangenverbindungsstück (101) und die Tragelemente (102, 104, 103) durch Schweißen, Klebstoff, Schraube(n), (einen) Bolzen oder Kombinationen davon zusammengefügt sind.

13. Endabschnitt (10) nach einem der vorhergehenden Ansprüche, wobei die Tragelemente (102, 104, 103) eine andere Dicke als das Fahrzeugverbindungsstück (100) und das Zugstangenverbindungsstück (101) aufweisen.

14. Zugstangenbaugruppe (1) für ein Fahrzeug, wobei die Zugstangenbaugruppe (1) wenigstens einen Endabschnitt (10) nach einem der vorhergehenden Ansprüche, vorzugsweise zwei Endabschnitte (10) nach einem der vorhergehenden Ansprüche umfasst.

15. Verfahren zum Herstellen eines Endabschnitts (10) für eine Zugstangenbaugruppe (1), wobei das Verfahren die folgenden Schritte umfasst:
- Bereitstellen eines Fahrzeugverbindungsstücks (100), eines Zugstangenverbindungsstücks (101), eines ersten, eines zweiten und eines dritten Tragelements (102, 104, 103), wobei das erste, das zweite und das dritte Tragelement (102, 104, 103) als separate Materialteile bereitgestellt werden, wobei das Fahrzeugverbindungsstück (100) und das Zugstangenverbindungsstück (101) aus einem einheitlichen Materialteil ausgebildet sind,
- festes Anordnen des Fahrzeugverbindungsstücks (100), des Zugstangenverbindungsstücks (101) und des ersten, des zweiten und des dritten Tragelements (102, 104, 103) derart miteinander, dass das erste Tragelement (102) und das zweite Tragelement (104) mit dem Fahrzeugverbindungsstück (100) und dem Zugstangenverbindungsstück (101) verbunden sind und sich zwischen ihnen erstrecken, und derart, dass eine Kastenstruktur ausgebildet wird,
wobei das Fahrzeugverbindungsstück (100) im Wesentlichen parallel zu einer Rückwand des Fahrzeugs angeordnet ist, und
wobei das Zugstangenverbindungsstück (101) neben und im Wesentlichen parallel zu dem Ende der Zugstange (11) angeordnet ist.

16. Verfahren zum Herstellen eines Endabschnitts (10) für eine Zugstangenbaugruppe (1), wobei das Verfahren die folgenden Schritte umfasst:
- Bereitstellen eines Fahrzeugverbindungsstücks (100), eines Zugstangenverbindungsstücks (101), eines ersten, eines zweiten und eines dritten Tragelements (102, 104, 103),
- festes Anordnen des Fahrzeugverbindungsstücks (100), des Zugstangenverbindungsstücks (101) und des ersten, des zweiten und des dritten Tragelements (102, 104, 103) derart miteinander, dass das erste Tragelement (102) und das zweite Tragelement (104) mit dem Fahrzeugverbindungsstück (100) und dem Zugstangenverbindungsstück (101) verbunden sind und sich zwischen ihnen erstrecken, und derart, dass eine Kastenstruktur ausgebildet wird,
- Bereitstellen von Ausschnitten (105) in der Kastenstruktur,
- Bereitstellen des Fahrzeugverbindungsstücks (100) mit mehreren Verbindungspunkten (106), an denen das Fahrzeugverbindungsstück an einem Fahrzeug befestigt werden kann, wobei wenigstens einige der Fahrzeugverbindungspunkte (106) innerhalb der Kastenstruktur angeordnet sind,
wobei das Fahrzeugverbindungsstück (100) im Wesentlichen parallel zu einer Rückwand des Fahrzeugs angeordnet ist, und
wobei das Zugstangenverbindungsstück (101) neben und im Wesentlichen parallel zu dem Ende der Zugstange (11) angeordnet ist.

17. Verfahren nach Anspruch 15, das Verfahren ferner umfassend den folgenden Schritt:
- Bereitstellen von Ausschnitten (105) in der Kastenstruktur.

18. Verfahren nach einem der Ansprüche 16 bis 17, wobei die Ausschnitte (105) in dem Fahrzeugverbindungsstück (100), dem Zugstangenverbindungsstück (101) und/oder in den mehreren Tragelementen (102, 103, 104) bereitgestellt sind, bevor sie fest aneinander angeordnet werden.

19. Verfahren nach einem der Ansprüche 15 bis 18, wobei das dritte Tragelement (103) derart angeordnet ist, dass es mit dem ersten und dem zweiten Tragelement (102, 104) verbunden ist und sich zwischen ihnen derart erstreckt, dass die Kastenstruktur ausgebildet wird,
vorzugsweise derart, dass das dritte Tragelement (103) an dem Fahrzeugverbindungsstück (100), dem Zugstangenverbindungsstück (101) und dem ersten und dem zweiten Tragelement (102, 104) fest angeordnet ist.

20. Verfahren nach einem der Ansprüche 15 bis 19, wobei das feste Anordnen das Zusammenfügen des Fahrzeugverbindungsstücks (100), des Zugstangenverbindungsstücks (101) und der mehreren Tragelemente (102, 103, 104) miteinander durch Schweißen, Klebstoff, Schraube(n), (einen) Bolzen oder Kombinationen davon umfasst.

## Revendications

1. Section d'extrémité (10) pour un ensemble barre de remorquage (1) destiné à un véhicule, ladite section d'extrémité (10) comprenant une partie de liaison de véhicule (100) conçue pour être reliée audit véhicule et une partie de liaison de barre de remorquage (101) conçue pour être reliée à une barre de remorquage (11), et au moins un premier élément de support (102) et un deuxième élément de support (104) reliés à ladite partie de liaison de véhicule (100) et à ladite partie de liaison de barre de remorquage (101) et s'étendant entre elles,
**caractérisé en ce que**
ladite section d'extrémité (10) comprend un troisième élément de support (103) relié audit premier et audit deuxième élément de support (102, 104) et s'étendant entre eux de telle sorte qu'une structure de type boîte est formée,
ladite partie de liaison de véhicule (100) est agencée sensiblement parallèle à une paroi arrière dudit véhicule, et
ladite partie de liaison de barre de remorquage (101) est agencée adjacente et sensiblement parallèle à l'extrémité de ladite barre de remorquage (11),
dans laquelle les premier, deuxième et troisième éléments de support (102, 104, 103) sont fournis sous forme de pièces de matériau séparées,
ladite partie de liaison au véhicule (100) et ladite partie de liaison à la barre de remorquage (101) étant formées d'une seule pièce de matériau.

2. Section d'extrémité (10) pour un ensemble barre de remorquage (1) destiné à un véhicule, ladite section d'extrémité (10) comprenant une partie de liaison de véhicule (100) conçue pour être reliée audit véhicule et une partie de liaison de barre de remorquage (101) conçue pour être reliée à une barre de remorquage (11), et au moins un premier élément de support (102) et un deuxième élément de support (104) reliés à ladite partie de liaison de véhicule (100) et à ladite partie de liaison de barre de remorquage (101) et s'étendant entre elles,
**caractérisé en ce que**
ladite section d'extrémité (10) comprend un troisième élément de support (103) relié audit premier et audit deuxième élément de support (102, 104) et s'étendant entre eux de telle sorte qu'une structure de type boîte est formée,
ladite partie de liaison de véhicule (100) est agencée sensiblement parallèle à une paroi arrière dudit véhicule, et
ladite partie de liaison de barre de remorquage (101) est agencée adjacente et sensiblement parallèle à l'extrémité de ladite barre de remorquage (11),
dans laquelle la structure de la boîte comprend des découpes (105),
dans laquelle ladite partie de liaison de véhicule (100) comprend une pluralité de points de liaison (106) au niveau desquels ladite partie de liaison de véhicule peut être attachée à un véhicule, au moins certains desdits points de liaison de véhicule (106) étant agencés à l'intérieur de ladite structure de type boîte.

3. Section d'extrémité (10) selon la revendication 1, dans laquelle ladite partie de liaison de véhicule (100) comprend une pluralité de points de liaison (106) au niveau desquels ladite partie de liaison de véhicule peut être fixée à un véhicule, au moins certains desdits points de liaison de véhicule (106) étant agencés à l'intérieur de ladite structure de type boîte.

4. Section d'extrémité (10) selon les revendications 1 ou 3, dans laquelle ladite structure de type boîte comprend des découpes (105).

5. Section d'extrémité (10) selon les revendications 2 ou 4, dans laquelle lesdites découpes (105) sont positionnées dans des zones moins importantes pour l'intégrité structurelle.

6. Section d'extrémité (10) selon les revendications 2, 4 ou 5, dans laquelle lesdites découpes (105) sont positionnées dans la partie de liaison de véhicule (100) afin d'améliorer une répartition de charge dans cette partie.

7. Section d'extrémité (10) selon l'une quelconque des revendications 2, 4, 5 ou 6, et dans laquelle au moins une découpe (105) est positionnée à proximité immédiate d'un point de liaison (106) au niveau duquel la partie de liaison de véhicule (100) peut être attachée à un véhicule.

8. Section d'extrémité (10) selon l'une quelconque des revendications précédentes, dans laquelle ledit troisième élément de support (103) est relié à ladite partie de liaison de véhicule (100) et à ladite partie de liaison de barre de remorquage (101) et s'étendant entre elles de telle sorte qu'une structure de type boîte sensiblement confinée est formée.

9. Section d'extrémité (10) selon l'une quelconque des revendications précédentes, dans laquelle ladite partie de liaison de véhicule (100) et ladite partie de liaison de barre de remorquage (101) sont agencées selon un angle (α) l'une par rapport à l'autre.

10. Section d'extrémité (10) selon la revendication 9, dans laquelle l'angle (α) entre la partie de liaison de véhicule (100) et la partie de liaison de barre de remorquage (101) est compris dans la plage de 45° à 150°.

11. Section d'extrémité (10) selon la revendication 2 ou selon l'une quelconque des revendications 5 à 10 lorsqu'elles sont dépendantes de la revendication 2, dans laquelle ladite partie de liaison de véhicule (100) et ladite partie de liaison de barre de remorquage (101) sont formées en une seule pièce de matériau.

12. Section d'extrémité (10) selon l'une quelconque des revendications précédentes, dans laquelle la partie de liaison de véhicule (100), la partie de liaison de barre de remorquage (101) et les éléments de support (102, 104, 103) sont assemblés par soudage, par adhésif, par une ou des vis, par un ou des boulons ou des combinaisons de ceux-ci.

13. Section d'extrémité (10) selon l'une quelconque des revendications précédentes, dans laquelle les éléments de support (102, 104, 103) ont une épaisseur différente de la partie de liaison de véhicule (100) et de la partie de liaison de barre de remorquage (101).

14. Ensemble barre de remorquage (1) pour un véhicule, ledit ensemble barre de remorquage (1) comprenant au moins une section d'extrémité (10) selon l'une quelconque des revendications précédentes, de préférence deux sections d'extrémité (10) selon l'une quelconque des revendications précédentes.

15. Procédé de fabrication d'une section d'extrémité (10) pour un ensemble barre de remorquage (1), ledit procédé comprenant les étapes consistant à :
- fournir une partie de liaison au véhicule (100), une partie de liaison à la barre de remorquage (101), un premier, un deuxième et un troisième élément de support (102, 104, 103), lesdits premier, deuxième et troisième éléments de support (102, 104, 103) étant fournis sous forme de pièces de matériau séparées, ladite partie de liaison au véhicule (100) et ladite partie de liaison à la barre de remorquage (101) étant formées dans une seule pièce de matériau unitaire,
- agencer à demeure la partie de liaison de véhicule (100), la partie de liaison de barre de remorquage (101) et le premier, le deuxième et le troisième élément de support (102, 104, 103) les uns par rapport aux autres, de telle sorte que ledit premier élément de support (102) et ledit deuxième élément de support (104) sont reliés à ladite partie de liaison de véhicule (100) et à ladite partie de liaison de barre de remorquage (101) et s'étendent entre elles, et de telle sorte qu'une structure de type boîte est formée,
ladite partie de liaison de véhicule (100) étant agencée sensiblement parallèle à une paroi arrière dudit véhicule, et
ladite partie de liaison de barre de remorquage (101) étant agencée adjacente et sensiblement parallèle à l'extrémité de ladite barre de remorquage (11).

16. Procédé de fabrication d'une section d'extrémité (10) pour un ensemble barre de remorquage (1), ledit procédé comprenant les étapes consistant à :
- fournir une partie de liaison de véhicule (100), une partie de liaison de barre de remorquage (101), un premier, un deuxième et un troisième élément de support (102, 104, 103),
- agencer à demeure la partie de liaison de véhicule (100), la partie de liaison de barre de remorquage (101) et le premier, le deuxième et le troisième élément de support (102, 104, 103) les uns par rapport aux autres, de telle sorte que ledit premier élément de support (102) et ledit deuxième élément de support (104) sont reliés à ladite partie de liaison de véhicule (100) et à ladite partie de liaison de barre de remorquage (101) et s'étendent entre elles, et de telle sorte qu'une structure de type boîte est formée,
- fournir des découpes (105) dans la structure de type boîte.
- fournir ladite partie de liaison de véhicule (100) avec une pluralité de points de liaison (106) au niveau desquels ladite partie de liaison de véhicule peut être fixée à un véhicule, au moins certains desdits points de liaison de véhicule (106) étant agencés à l'intérieur de ladite structure de type boîte.
ladite partie de liaison de véhicule (100) étant agencée sensiblement parallèle à une paroi arrière dudit véhicule, et
ladite partie de liaison de barre de remorquage (101) étant agencée adjacente et sensiblement parallèle à l'extrémité de ladite barre de remorquage (11).

17. Procédé selon la revendication 15, ledit procédé comprend en outre les étapes consistant à :
- fournir des découpes (105) dans la structure de type boîte.

18. Procédé selon l'une quelconque des revendications 16 à 17, dans lequel les découpes (105) sont fournies dans la partie de liaison de véhicule (100), la partie de liaison de barre de remorquage (101) et/ou dans la pluralité d'éléments de support (102, 103, 104) avant de les agencer à demeure les uns par rapport aux autres.

19. Procédé selon l'une quelconque des revendications 15 à 18, dans lequel le troisième élément de support (103) est agencé de telle sorte qu'il est relié audit premier et audit deuxième élément de support (102, 104) et s'étend entre eux, de telle sorte que la structure de type boîte est formée,
de préférence de telle sorte que le troisième élément de support (103) est agencé à demeure sur la partie de liaison de véhicule (100), la partie de liaison de barre de remorquage (101) et le premier et le deuxième élément de support (102, 104).

20. Procédé selon l'une quelconque des revendications 15 à 19, dans lequel l'agencement à demeure comprend l'assemblage de la partie de liaison de véhicule (100), de la partie de liaison de barre de remorquage (101) et de la pluralité d'éléments de support (102, 103, 104) les uns aux autres par soudage, par adhésif, par une ou des vis, par un ou des boulons ou des combinaisons de ceux-ci.
